# EUROPÄISCHE PATENTSCHRIFT

(11) **EP 3 636 117 B1**
(45) Veröffentlichungstag und Bekanntmachung des Hinweises auf die Patenterteilung: **09.06.2021**
(21) Anmeldenummer: 19198676.9
(22) Anmeldetag: 20.09.2019
(51) Int. Cl.: A47J 36/32

(54) **HAUSGERÄT MIT EINER BENUTZERSCHNITTSTELLE ZUR EINGABE VON WERTEN VON BETRIEBSPARAMETERN**
HAUSHOLD APPLIANCE WITH USER INTERFACE TO INPUT VALUES OF OPERATING PARAMETERS
APPAREIL MÉNAGER AVEC INTERFACE UTILISATEUR POUR DONNER LES VALEURS DE PARAMÈTRES D'EXERCISE

(30) Priorität: 11.10.2018 DE 102018217417
(43) Veröffentlichungstag der Anmeldung: 15.04.2020
(73) Patentinhaber: BSH Hausgeräte GmbH, 81739 München (DE)
(72) Erfinder: Brunner, Andreas, 83301 Traunreut (DE)

(56) Entgegenhaltungen:
- EP-A1- 2 805 653
- EP-A1- 3 062 206
- WO-A1-2017/190464
- DE-A1-102007 019 169

## Beschreibung

Die Erfindung betrifft ein Hausgerät mit einer Benutzerschnittstelle zur Eingabe von Parameterwerten von mehreren Betriebsparametern.

Ein Küchengerät, als Beispiel für ein Hausgerät, kann dazu verwendet werden, in einem Behälter Nahrungsmittel zu verarbeiten, z.B. zu raspeln, zu kneten, zu zerkleinern, zu vermischen und/oder zu garen. Ein Küchengerät kann zumindest einen Motor aufweisen, mit dem ein Verarbeitungsaufsatz bzw. ein Werkzeug (z.B. ein Messer oder ein Knethaken) angetrieben wird. Außerdem kann das Küchengerät eine Temperierungseinheit aufweisen, mit der ein Nahrungsmittel in dem Behälter des Küchengeräts temperiert, insbesondere erwärmt, werden kann. Des Weiteren kann ein Küchengerät zumindest ein Bedienelement aufweisen, mit dem der Motor aktiviert bzw. deaktiviert werden kann, mit dem eine Soll-Drehzahl des Motors eingestellt werden kann und/oder mit dem eine Soll-Temperatur für den Behälter eingestellt werden kann.

EP 3 062 206 A1 beschreibt einen Ofen mit einer graphischen Benutzerschnittstelle, über die durch Berühren die Temperatur und die Garzeit festgelegt werden können.

Das vorliegende Dokument befasst sich mit der technischen Aufgabe, die Effizienz und die Zuverlässigkeit der Eingabe von Betriebsparametern eines Hausgeräts, insbesondere eines Küchengeräts, zu erhöhen.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß der Erfindung wird ein Hausgerät beschrieben, das eine Benutzerschnittstelle mit einem berührungsempfindlichen Bildschirm (z.B. einem Touchscreen) umfasst. Das Hausgerät kann z.B. ein Küchengerät, eine Küchenmaschine, ein Herd, ein Ofen, eine Waschmaschine, eine Spülmaschine, eine Kaffeemaschine, etc. sein.

Außerdem umfasst das Hausgerät zumindest eine Betriebskomponente mit zumindest zwei einstellbaren Betriebsparametern. Beispielsweise kann das Hausgerät zumindest einen Aktor, insbesondere einen elektrischen Motor oder eine Pumpe, als Betriebskomponente umfassen. Alternativ oder ergänzend kann das Hausgerät eine Temperierungseinheit (z.B. ein Heizelement oder ein Kühlelement) als Betriebskomponente umfassen.

Durch den Betrieb der zumindest einen Betriebskomponente wird eine Funktion des Hausgeräts erbracht. Beispielsweise kann durch den Betrieb des Aktors ein Werkzeug zur Verarbeitung eines Nahrungsmittels angetrieben werden. Alternativ oder ergänzend kann durch Betrieb der Temperierungseinheit ein Nahrungsmittel gegart werden. Dabei wird die Funktion durch Änderung von Parameterwerten der zumindest zwei einstellbaren Betriebsparameter verändert. Beispielsweise kann durch eine Änderung der Drehzahl des Aktors und/oder durch eine Änderung der Solltemperatur der Temperierungseinheit die Funktion des Hausgeräts verändert werden.

Ferner umfasst das Hausgerät eine Steuereinheit, die eingerichtet ist, zu veranlassen, dass auf dem Bildschirm ein mehrdimensionaler (insbesondere ein zweidimensionaler) Parameterbereich dargestellt wird. Der Parameterbereich zeigt zulässige Kombinationen von Parameterwerten der zumindest zwei Betriebsparameter an. Insbesondere kann der Parameterbereich innerhalb eines mehrdimensionalen Wertebereichs von grundsächlich möglichen Kombination von Parameterwerten (der sich z.B. aus den technisch möglichen Wertebereichen der einzelnen Betriebsparameter ergibt) den Teilbereich anzeigen, der zulässig ist. Die Eingabe einer Kombination von Parameterwerten, die außerhalb des Parameterbereichs liegt, kann somit unzulässig sein. Der mehrdimensionale Wertebereich kann eine Mehrzahl von Achse (z.B. Achsen eines kartesischen Koordinatensystems) aufweisen. Dabei können die unterschiedlichen einstellbaren Betriebsparameter jeweils einer Achse der Mehrzahl von Achsen zugeordnet sein. Insbesondere können ein erster Betriebsparameter einer ersten Achse (z.B. der X-Achse) und ein zweiter Betriebsparameter einer zweiten Achse (z.B. der Y-Achse) auf dem Bildschirm zugeordnet sein.

Die Steuereinheit ist ferner eingerichtet, eine Berührung an einer Berührposition auf dem Bildschirm zu detektieren. Die Berührposition kann bestimmte Koordinaten für die Mehrzahl von Achsen des mehrdimensionalen Wertebereichs aufweisen. Die Steuereinheit kann insbesondere eingerichtet sein, Koordinaten der Berührposition für die erste Achse und für die zweite Achse der Mehrzahl von Achsen zu ermitteln.

Außerdem ist die Steuereinheit eingerichtet, zu bestimmen, ob die Berührposition innerhalb oder außerhalb des Parameterbereichs liegt. Zu diesem Zweck kann ermittelt werden, ob die Koordinaten der Berührposition innerhalb oder außerhalb des Parameterbereichs liegen.

Des Weiteren ist die Steuereinheit eingerichtet, auf Basis der Berührposition Parameterwerte der zumindest zwei Betriebsparameter für den Betrieb der zumindest einen Betriebskomponente zu ermitteln, wenn bestimmt wird, dass die Berührposition innerhalb des Parameterbereichs liegt. Dabei können die Parameterwerte für den ersten Betriebsparameter und für den zweiten Betriebsparameter auf Basis der Koordinaten der Berührposition ermittelt werden. Insbesondere können der Parameter für den ersten Betriebsparameter auf Basis der Koordinate für die erste Achse und der Parameter für den zweiten Betriebsparameter auf Basis der Koordinate für die zweite Achse ermittelt werden.

Andererseits kann die Steuereinheit eingerichtet sein, die Berührposition für die Ermittlung der Parameterwerte der zumindest zwei Betriebsparameter unberücksichtigt zu lassen, wenn bestimmt wird, dass die Berührposition außerhalb des Parameterbereichs liegt. Insbesondere kann die Eingabe von Kombinationen von Parameterwerten, die außerhalb des Parameterbereichs liegen, unterbunden werden.

Das beschriebene Hausgerät ermöglicht es somit einem Nutzer, in effizienter und zuverlässiger Weise die Parameterwerte von mehreren Betriebsparametern gleichzeitig festzulegen. So können der Komfort und die Zuverlässigkeit eines Hausgeräts erhöht werden.

Die Steuereinheit kann eingerichtet sein, eine visuelle Rückmeldung auf dem Bildschirm zu erzeugen, insbesondere durch Verwendung unterschiedlicher Farben, die anzeigt, ob die Berührposition innerhalb oder außerhalb des Parameterbereichs liegt. Beispielsweise kann die bildliche Darstellung auf dem Bildschirm von einer ersten Farbe (z.B. rot) auf eine zweite Farbe (z.B. grün) wechseln, wenn sich die Berührposition von außerhalb des Parameterbereichs in den Parameterbereich bewegt. So kann der Nutzer bei der Eingabe von zulässigen Parameterwerten für die zumindest zwei Betriebsparameter unterstützt werden, wodurch der Komfort des Hausgeräts weiter erhöht wird.

Die Steuereinheit kann eingerichtet sein, Standard-Parameterwerte und/oder aktuell eingestellte Parameterwerte und/oder Istwerte der zumindest zwei Betriebsparameter zu ermitteln. Die Standard-Parameterwerte und/oder die aktuell eingestellten Parameterwerte und/oder die Ist-Werte können einer Ist-Position auf dem Bildschirm zugewiesen werden, und es kann veranlasst werden, dass an der Ist-Position ein Icon (das in diesem Dokument als Ist-Icon bezeichnet wird) auf dem Bildschirm dargestellt wird. So kann der Nutzer bei der Festlegung von zulässigen Parameterwerten für die zumindest zwei Betriebsparameter unterstützt werden, wodurch der Komfort des Hausgeräts weiter erhöht wird.

Die Steuereinheit kann eingerichtet sein, zu erkennen, dass sich der Istwert zumindest eines der zumindest zwei Betriebsparameter verändert (z.B. infolge der Festlegung zumindest eines neuen Parameterwertes). Die Ist-Position des Ist-Icons kann dann in Abhängigkeit des veränderten Istwertes angepasst werden. So kann der Nutzer in zuverlässiger und effizienter Weise über den Betriebszustand des Hausgeräts informiert werden.

Die Steuereinheit kann eingerichtet sein, zu erkennen, dass sich die Berührposition ausgehend von der Ist-Position von der Ist-Position weg bewegt. Mit anderen Worten, es kann einem Nutzer ermöglicht werden, das Ist-Icon durch Berühren des Bildschirms an eine andere Position zu verschieben, um eine Eingabe von Parameterwerten zu tätigen. Es kann dann veranlasst werden, dass zusätzlich zu dem Ist-Icon ein Ziel-Icon an der Berührposition auf dem Bildschirm dargestellt wird. So kann dem Nutzer in effizienter Weise vermittelt werden, dass von den Ist-Werten abweichende Parameterwerte eingeben wurden.

Die Steuereinheit kann eingerichtet sein, zu veranlassen, dass an der Berührposition ein Fadenkreuz auf dem Bildschirm ausgegeben wird, wobei das Fadenkreuz die Berührposition mit der ersten Achse für den ersten Betriebsparameter und mit der zweiten Achse für den zweiten Betriebsparameter verbinden kann. Durch die Ausgabe eines Fadenkreuzes kann die Genauigkeit der Eingabe von Parameterwerten erhöht werden.

Die Steuereinheit ist eingerichet, Statusinformation in Bezug auf einen Ist-Zustand des Hausgeräts und/oder in Bezug auf einen bereits eingestellten Parameterwert eines einstellbaren Betriebsparameters des Hausgeräts zu ermitteln. Der Parameterbereich wird dann in Abhängigkeit von der Statusinformation ermittelt. Durch die Berücksichtigung von Statusinformation bei der Ermittlung des zulässigen Parameterbereichs kann die Zuverlässigkeit der Eingabe von zulässigen Parameterwerten weiter erhöht werden.

Die Steuereinheit kann eingerichtet sein, zu veranlassen, dass Zusatzinformation auf dem Bildschirm ausgegeben wird. Die Zusatzinformation kann umfassen: Information in Bezug auf einen bereits ausgewählten Parameterwert für zumindest einen Betriebsparameter; Information in Bezug auf eine Anwendung des Hausgeräts, die mit den der Berührposition entsprechenden Parameterwerten der zumindest zwei Betriebsparameter ermöglicht wird; Information in Bezug auf einen Ressourcenverbrauch des Hausgeräts, der durch den Betrieb mit den der Berührposition entsprechenden Parameterwerten der zumindest zwei Betriebsparameter bewirkt wird; Information in Bezug auf ein Ergebnis und/oder einen Effekt, das und/oder der mit den der Berührposition entsprechenden Parameterwerten der zumindest zwei Betriebsparameter erzielt wird; und/oder Information in Bezug auf unterschiedliche Teilbereiche des Funktionsbereichs für unterschiedliche Anwendungen des Hausgeräts. Durch die Ausgabe von Zusatzinformation können der Komfort und die Zuverlässigkeit der Festlegung der Parameterwerte von Betriebsparametern eines Hausgeräts weiter erhöht werden.

Das Hausgerät kann ein Küchengerät, insbesondere eine Küchenmaschine, sein. Insbesondere kann das Hausgerät einen Behälter zur Aufnahme von ein oder mehreren Zutaten für ein Nahrungsmittel umfassen. Die zumindest eine Betriebskomponente kann einen Aktor, insbesondere einen elektrischen Motor, umfassen, der als einstellbaren Betriebsparameter eine Drehzahl aufweist. Dabei kann der Aktor eingerichtet sein, ein (ggf. austauschbares) Werkzeug zur Verarbeitung von ein oder mehreren Zutaten für ein Nahrungsmittel in Abhängigkeit von einer von der Berührposition abhängigen Drehzahl anzutreiben. Des Weiteren kann die zumindest eine Betriebskomponente eine Temperierungseinheit umfassen, die als einstellbaren Betriebsparameter eine Temperatur aufweist. Die Temperierungseinheit kann eingerichtet sein, den Behälter in Abhängigkeit von einer von der Berührposition abhängigen Temperatur zu temperieren, insbesondere zu erwärmen. Über den Bildschirm kann dann in effizienter und zuverlässiger Weise eine zulässige Kombination aus Drehzahl und Temperatur festgelegt werden.

Wie bereits oben dargelegt, kann die Steuereinheit eingerichtet sein, Statusinformation zu ermitteln. Dabei kann die Statusinformation ein Werkzeug aus einer Mehrzahl von unterschiedlichen Werkzeugen anzeigen, das von dem Aktor angetrieben wird. Alternativ oder ergänzend kann die Statusinformation eine Ist-Temperatur des Behälters anzeigen. Der zulässige Parameterbereich für die Drehzahl und die Temperatur kann dann in Abhängigkeit von der Statusinformation ermittelt bzw. angepasst werden. So kann ein zuverlässiger Betrieb eines Küchengeräts ermöglicht werden.

Das Hausgerät kann einen Garraum und/oder eine Garfläche aufweisen. Das Hausgerät kann z.B. ein Herd oder ein Ofen sein. Die zumindest eine Betriebskomponente kann eine Temperierungseinheit umfassen, die eingerichtet ist, den Garraum und/oder die Garfläche zu erwärmen. Die zumindest zwei einstellbaren Betriebsparameter können dann eine Temperatur des Garraums und/oder der Garfläche und eine Zeitdauer der Temperierung des Garraums und/oder der Garfläche umfassen. So kann ein zuverlässiger Betrieb eines Herds oder Ofens ermöglicht werden.

Die zumindest eine Betriebskomponente des Hausgeräts kann einen Brühkopf umfassen, der eingerichtet ist, Kaffeepulver zur Herstellung eines kaffeehaltigen Getränks aufzunehmen. Das Hausgerät kann insbesondere eine Kaffeemaschine oder ein Kaffeevollautomat sein. Die zumindest zwei einstellbaren Betriebsparameter können dann eine Getränkemenge und eine Kaffeestärke umfassen. So kann eine zuverlässige Herstellung eines kaffeehaltigen Getränks ermöglicht werden.

Wie bereits oben dargelegt, kann die Steuereinheit eingerichtet sein, Statusinformation zu ermitteln. Dabei kann die Statusinformation anzeigen: einen Typ des herzustellenden Getränks; eine Menge an verfügbaren Ressourcen, insbesondere an Wasser, an Kaffee und/oder an Milch, zur Herstellung des Getränks; und/oder eine verfügbare Kapazität eines Abfallbehälters, insbesondere eines Abfallbehälters für Kaffee und/oder für Abwasser. Der zulässige Parameterbereich kann dann in Abhängigkeit von der Statusinformation ermittelt bzw. angepasst werden. So kann die Zuverlässigkeit der Herstellung eines Getränks weiter erhöht werden.

Gemäß einem weiteren Aspekt wird ein Verfahren beschrieben, das entsprechende Merkmale zu der in diesem Dokument beschriebenen Steuereinheit umfasst.

Es ist zu beachten, dass jegliche Aspekte des in diesem Dokument beschriebenen Hausgeräts und/oder des in diesem Dokument beschriebenen Verfahrens in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figur 1 ein Küchengerät in einer Seitenansicht als Beispiel für ein Hausgerät;
Figur 2 eine beispielhafte bildliche Ausgabe auf einem Bildschirm eines Hausgeräts; und
Figur 3 ein Ablaufdiagramm eines beispielhaften Verfahrens zur Eingabe von Betriebsparametern für den Betrieb eines Hausgeräts.

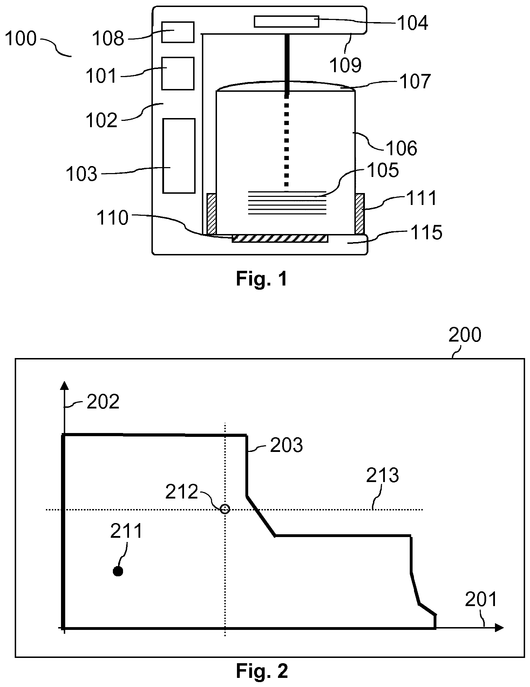

Wie eingangs dargelegt, befasst sich das vorliegende Dokument mit der Erhöhung der Effizienz, der Geschwindigkeit und der Zuverlässigkeit der Festlegung von Parameterwerten für mehrere Betriebsparameter eines Hausgeräts. In diesem Zusammenhang zeigt Fig. 1 ein Küchengerät 100, insbesondere eine Küchenmaschine, als Beispiel für ein Hausgerät. Weitere beispielhafte Hausgeräte sind ein Herd, ein Ofen, eine Waschmaschine, eine Spülmaschine, eine Waschmaschine, ein Trockner, eine Kaffeemaschine, etc.

Das in Fig. 1 dargestellte Küchengerät 100 umfasst ein Gehäuse 102, in bzw. an dem ein (typischerweise herausnehmbarer) Behälter 106 angeordnet werden kann, der ggf. mit einer (transparenten) Abdeckung 107 abgedeckt werden kann. In dem Behälter 106 können Nahrungsmittel verarbeitet werden, z.B. zerkleinert, geknetet und/oder gegart werden. Die Abdeckung 107 kann es einem Nutzer ermöglichen, den Fortschritt der Verarbeitung eines Nahrungsmittels in dem Behälter 106 zu beobachten. Des Weiteren kann die Abdeckung 107 als Spritzschutz dienen.

Das Küchengerät 100 kann ein oder mehrere Verarbeitungs- und/oder Betriebskomponenten 104, 111 zur Verarbeitung eines (flüssigen und/oder festen) Nahrungsmittels umfassen. Beispielhafte Verarbeitungs- und/oder Betriebskomponenten 104, 111 sind
- ein Aktor 104, insbesondere ein (elektrischer) Motor, zum Antrieb von ein oder mehreren unterschiedlichen Verarbeitungsaufsätzen bzw. Werkzeugen 105 (z.B. einem Messer, einem Knethaken, einer Raspel, etc.); die Verarbeitungsaufsätze bzw. Werkzeuge 105 können z.B. an einem Schwenkarm 109 des Küchengeräts 100 mit dem Aktor 104 gekoppelt werden bzw. gekoppelt sein; und/oder
- eine Temperierungseinheit 111 (z.B. ein Heiz- oder ein Kühlelement) zur Temperierung des Behälters 106.

Das Küchengerät 100 kann ferner eine Benutzerschnittstelle 103 (z.B. mit ein oder mehreren Bedienelementen, wie z.B. Schalter bzw. Knöpfe, und/oder mit ein oder mehreren Ausgabeelementen, wie z.B. einem (ggf. berührungsempfindlichen) Bildschirm) umfassen, mit der die Verarbeitungs- und/oder Betriebskomponenten 104, 111 des Küchengeräts 100 durch einen Nutzer eingestellt werden können. Beispielsweise können eine Rotationsgeschwindigkeit bzw. eine Drehzahl des Motors 104 und/oder eine Temperatur der Temperierungseinheit 111 als Betriebsparameter eingestellt werden.

Das Küchengerät 100 umfasst typischerweise eine Steuereinheit 101, die eingerichtet ist, die ein oder mehreren Verarbeitungs- und/oder Betriebskomponenten 104, 111 des Küchengeräts 100 in Abhängigkeit von einer Eingabe eines Nutzers an der Benutzerschnittstelle 103 zu steuern. Außerdem kann das Küchengerät 100 eine Kommunikationseinheit 108 (z.B. eine drahtlose Kommunikationsschnittstelle, etwa WLAN, oder eine USB Schnittstelle) umfassen, über die dem Küchengerät 100 Information bereitgestellt werden kann. Das Küchengerät 100 kann ferner ein Wiegeelement 110 umfassen, das z.B. an einer Basis 115 des Küchengeräts 100 angeordnet ist, und das eingerichtet ist, Gewichtsdaten in Bezug auf das Gewicht des Behälters 106 zu erfassen.

Das in Fig. 1 dargestellte Küchengerät 100 (als Beispiel für ein Hausgerät) kann somit eine Mehrzahl von unterschiedlichen Betriebsparametern, wie z.B. die Drehzahl des Aktors 104 und die Temperatur der Temperierungseinheit 111, aufweisen. Die zulässigen Wertebereiche für die unterschiedlichen Betriebsparameter können voneinander abhängig sein. Insbesondere kann z.B. die maximal einstellbare Drehzahl des Aktors 104 in Abhängigkeit von einer aktuell eingestellten Temperatur begrenzt sein und/oder die maximal einstellbare Temperatur der Temperierungseinheit 111 kann in Abhängigkeit von der aktuell eingestellten Drehzahl begrenzt sein. Derartige Abhängigkeiten zwischen den zulässigen Wertebereichen von Betriebsparametern eines Hausgeräts 100 können zu einer erhöhten Betriebssicherheit und/oder zu einer erhöhten Leistungsfähigkeit eines Hausgeräts 100 führen.

Wie bereits oben dargelegt, kann die Benutzerschnittstelle 103 eines Hausgeräts 100 einen berührungsempfindlichen Bildschirm 200 aufweisen (siehe Fig. 2). Die Steuereinheit 101 des Hausgeräts 100 kann eingerichtet sein, zu veranlassen, dass auf dem Bildschirm 200 ein mehrdimensionaler Parameterbereich 203 dargestellt wird, der gebündelt die zulässigen Wertebereiche von unterschiedlichen Betriebsparametern 201, 202 des Hausgeräts 100 anzeigt. Insbesondere kann der mehrdimensionale Parameterbereich 203 einen mehrdimensionalen, insbesondere einen zweidimensionalen, Raum von zulässigen Wertetupeln von Betriebsparametern 201, 202 anzeigen. Dabei kann jedem Betriebsparameter 201, 202 genau eine Achse des mehrdimensionalen Raums zugeordnet sein. In Fig. 2 wird ein zweidimensionaler Parameterbereich 203 dargestellt, der innerhalb der Fläche unterhalb des dargestellten Graphen die zulässigen Wertetupel für die beiden Betriebsparameter 201, 202 anzeigt.

Die Steuereinheit 101 kann eingerichtet sein, eine Berührung des Bildschirm 200 durch einen Nutzer zu detektieren. Insbesondere kann die Berührposition 212 detektiert werden, an der der Nutzer den Bildschirm 200 berührt. Die Berührposition 212 kann dann dem Nutzer, z.B. durch Darstellung eines Fadenkreuzes 213, auf dem Bildschirm 200 angezeigt werden.

Ferner kann von der Steuereinheit 101 ermittelt werden, ob sich die Berührposition 212 innerhalb oder außerhalb des Parameterbereichs 203 befindet. Diese Tatsache kann dem Nutzer auf dem Bildschirm 200 dargestellt werden (z.B. durch Verwendung von unterschiedlichen Farben für das Fadenkreuz 213, etwa "rot", wenn die Berührposition 212 außerhalb, und "grün", wenn die Berührposition 212 innerhalb des Parameterbereichs 203 liegt).

Wenn die Berührposition 212 innerhalb des zulässigen Parameterbereichs 203 liegt, so können die den Koordinaten der Berührposition 212 entsprechenden Parameterwerte der Betriebsparameter 201, 202 als Eingabe bzw. als Einstellung für die Betriebsparameter 201, 202 verwendet werden. Zu diesem Zweck kann ggf. eine Bestätigung des Nutzers erforderlich sein. Die Bestätigung kann z.B. dadurch erfolgen, dass die Berührposition 212 für einen bestimmten Zeitraum (etwa 3, 4, 5 Sekunden oder mehr) unverändert bleibt. Alternativ oder ergänzend kann die Bestätigung z.B. durch eine Erhöhung des Drucks auf den Bildschirm 200 erfolgen (bei Verwendung eines druckempfindlichen Bildschirms 200). Alternativ oder ergänzend kann die Bestätigung durch Ausgabe einer Bestätigungsanfrage und durch eine darauf folgende Bestätigungseingabe des Nutzers erfolgen.

Wenn die Berührposition 212 außerhalb des Parameterbereichs 213 liegt, so wird die Berührung des Bildschirms 200 nicht als Eingabe von Parameterwerten für die Betriebsparameter 201, 202 gewertet.

Die Steuereinheit 101 kann eingerichtet sein, die aktuell eingestellten Parameterwerte der Betriebsparameter 201, 202 stellen ein Wertetupel bzw. einen Punkt bzw. eine bestimmte Ist-Position 211 auf dem Bildschirm 200. An der Ist-Position 211 kann ein Icon auf dem Bildschirm 200 dargestellt werden. So kann es dem Nutzer ermöglicht werden, das Icon an der Ist-Position 211 durch Berührung innerhalb des zulässigen Parameterbereichs 213 zu verschieben, um die Parameterwerte der Betriebsparameter 201, 202 zu verändern.

Die Eingabe von Geräteparametern bzw. Betriebsparametern 201, 202 kann somit beschleunigt werden, indem einem Nutzer auf einem berührungsempfindlichen Bildschirm 200 ein Koordinatensystem angezeigt wird. Ein Druck und/oder eine Berührung auf dem Bildschirm 200 ermöglicht es dabei dem Nutzer, gleichzeitig mehrere, insbesondere zwei, Betriebsparameter 200 einzustellen.

In dem dargestellten Koordinatensystem können in effizienter Weise durch Darstellung eines zuverlässigen Parameterbereichs 213 Abhängigkeiten zwischen den Betriebsparametern 201, 202 dargestellt werden. Insbesondere kann in dem Koordinatensystem dargestellt werden, welche ein oder mehreren Parameterkombinationen erlaubt sind, und welche nicht.

Der zulässige Parameterbereich 213 (der anzeigt, welche ein oder mehrere Parameterkombinationen erlaubt sind) kann von dem Zustand des Hausgeräts 100 (von dem Zustand von Sensoren und/oder Aktoren des Hausgeräts 100), und/oder von einer Einstellung eines Nutzers an dem Hausgerät 100 (z.B. von einer vorher ausgewählten Betriebsart des Hausgeräts 100) abhängen.

Um den Nutzer bei der Auswahl zu unterstützen, können auch ein oder mehrere der folgenden Informationen auf dem Bildschirm 200 dargestellt werden:
- ein bereits gewählter Parameterwert des Betriebsparameters 201 der X-Achse;
- ein bereits gewählter Parameterwert des Betriebsparameters 202 der Y-Achse;
- ein Hinweis dazu, für welche Anwendung die aktuell gewählte Kombination von Werten der Betriebsparameter 201, 202 verwendet werden kann;
- Information in Bezug auf den Ressourcenverbrauch der aktuellen Einstellung der Parameterwerte der Betriebsparameter 201, 202 (z.B. Energieverbrauch, Verbrauch an Zutaten (z.B. Wasser und/oder Kaffeebohnen, bei einem Kaffeeautomaten), etc.);
- ein Bild, das das zu erwartende Ergebnis des Betriebs des Hausgeräts 100 mit den ausgewählten Parameterwerten anzeigt;
- unterschiedliche Zonen innerhalb des zulässigen Parameterbereichs 203 (z.B. für unterschiedliche Anwendungen des Hausgeräts 100); und/oder
- Standard-Einstellwerte und/oder die zuletzt verwendeten Werte der Betriebsparameter 201, 202.

Neben den (durch den Nutzer eingegebenen) Zielparameterwerten der Betriebsparameter 201, 202 (die durch ein Icon an der Berührposition 212 angezeigt werden) können ggf. auch die aktuellen Parameterwerte der Betriebsparameter 201, 202 durch Ausgabe eines Icons an einer Ist-Position 211 angezeigt werden.

Das in diesem Dokument beschriebene Eingabeverfahren kann für unterschiedliche Typen von Hausgeräten 100 (z.B. für einen Cookprocessor, einen Herd und/oder eine Kaffeemaschine, etc.) verwendet werden. Beispielsweise kann bei einer Küchenmaschine mit Heizfunktion eine schnelle und zuverlässige kombinierte Eingabe (z.B. während des laufenden Betriebs) von Werten für die Zieldrehzahl des Aktors 104 und für die Zieltemperatur der Temperierungseinheit 111 erfolgen. Zu diesem Zweck können die beiden Betriebsparameter 201, 202 auf einer Fläche dargestellt werden. Des Weiteren kann (z.B. durch Verwendung einer bestimmten Farbe) der zulässige Parameterbereich 203 dargestellt werden. Der zulässige Parameterbereich 203 kann dabei davon abhängen, welches Werkzeug 105 (z.B. Messer, Rührer, etc.) verwendet wird und/oder welche Temperatur der Behälter 106 aktuell aufweist (z.B. kann bei relativ hohen Temperaturen die maximal zulässige Drehzahl reduziert werden).

Beispielsweise können dem Nutzer die Istwerte der Betriebsparameter 201, 202 als Icon an einer Ist-Position 211 dargestellt werden. Der Nutzer kann dann seinen Finger auf dem Bildschirm 200 bewegen (insbesondere innerhalb des zulässigen Parameterbereichs 203). Dem Nutzer kann dann angezeigt werden, welche neuen Zielparameterwerte eingegeben wurden (als Icon an der Berührposition 212). Des Weiteren kann angezeigt werden, was ein typischer Anwendungsfall für die neuen Zielparameterwerte ist.

Nachdem der Nutzer den Finger von dem Bildschirm 200 entfernt, kann ein Punkt (als Beispiel für ein Icon) an der Ist-Position 211 für die Istparameterwerte und ein Punkt (als Beispiel für ein Icon) an der Berührposition 212 für die Sollparameterwerte angezeigt werden. Das Hausgerät 100 (insbesondere die Küchenmaschine) bewirkt daraufhin die Umsetzung der Sollparameterwerte (z.B. durch Beschleunigen des Aktors 104 und/oder durch Erwärmen des Behälters 106). Dieser Prozess kann dem Nutzer durch Bewegung des Punktes für die Istparameterwerte, d.h. durch Veränderung der Ist-Position 211, angezeigt werden.

In einem weiteren Beispiel können bei einem Herd auf einer ersten Achse die Betriebszeit und auf der zweiten Achse die Temperatur des Herds als Betriebsparameter 201, 202 angezeigt werden. Abhängig von der Betriebsart des Herds kann dann der Nutzer aus unterschiedlichen zulässigen Betriebsbereichen 203 unterschiedliche Kombination aus Temperatur und Betriebszeiten auswählen.

In einem weiteren Beispiel können bei einem Kaffeevollautomaten auf einer ersten Achse die Getränkemenge und auf der zweiten Achse die Kaffeestärke als Betriebsparameter 201, 202 angezeigt werden. Der zulässige Betriebsbereich 203 kann ggf. abhängig von dem gewählten Getränketyp angepasst werden. Aufgrund von technischen Rahmenbedingungen in dem Gerät 100 kann ggf. nicht jede Kombination aus Getränkemenge und Kaffeestärke ermöglicht werden. Die zulässigen Kombinationen können durch Darstellung des zulässigen Betriebsbereich 203 bildlich auf dem Bildschirm 200 dargestellt werden.

Durch Verwendung von verschiedenen Farben innerhalb des zulässigen Betriebsbereichs 203 können Teilbereiche dargestellt werden, in denen das Gerät 100 jeweils eine spezifische Verhaltensweise aufweist. Beispielsweise können ein oder mehrere Teilbereiche hervorgehoben werden, die es erfordern, dass das Getränk durch mehrere Brühvorgänge zubereitet wird.

Der zulässige Betriebsbereich 203 kann abhängen von:
- dem ausgewählten Getränk;
- den in dem Gerät 100 verfügbaren Ressourcen (z.B. verfügbare Wassermenge und/oder verfügbare Bohnenmenge und/oder verfügbare Milchmenge); und/oder
- der verbliebenen Kapazität in den ein oder mehreren Abfallbehältern des Geräts 100 (z.B. den Abfallbehälter für Kaffeepulver und/oder für Abwasser).

Als Zusatzinformation kann auf dem Bildschirm 200 dargestellt werden, mit welchen Parameterwerten das letzte Getränk hergestellt wurde und/oder mit welchen Parameterwerten das Gerät 100 standardmäßig zur Herstellung eines ausgewählten Getränks betrieben wird.

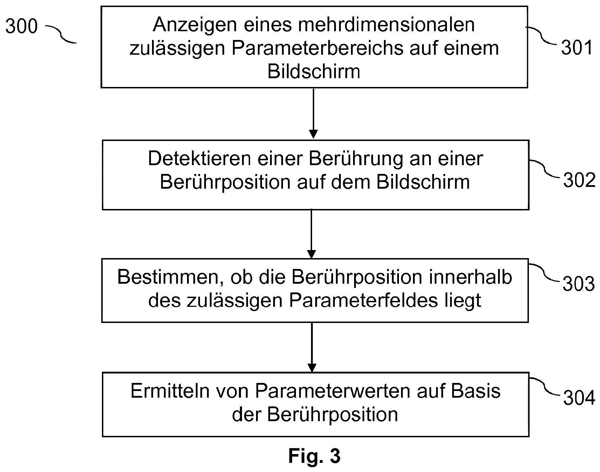

Fig. 3 zeigt ein Ablaufdiagramm eines beispielhaften Verfahrens 300 zur Eingabe von Parameterwerten für Betriebsparameter 201, 202 eines Hausgeräts 100. Das Hausgerät 100 umfasst dabei eine Benutzerschnittstelle 103 mit einem berührungsempfindlichen Bildschirm 200. Außerdem umfasst das Hausgerät 100 zumindest eine Betriebskomponente 104, 111 mit zumindest zwei einstellbaren Betriebsparametern 201, 202, wobei durch Betrieb der zumindest einen Betriebskomponente 104, 111 eine Funktion des Hausgeräts 100 erbracht wird. Dabei kann die Funktion des Hausgeräts 100 durch Änderung von Parameterwerten der zumindest zwei einstellbaren Betriebsparameter 201, 202 verändert werden. Das Verfahren 300 kann z.B. durch eine Steuereinheit 101 des Hausgeräts 100 ausgeführt werden.

Das Verfahren 300 umfasst das Anzeigen 301 eines mehrdimensionalen Parameterbereichs 203 auf dem Bildschirm 300, wobei der Parameterbereich 203 zulässige Kombinationen von Parameterwerten der zumindest zwei Betriebsparameter 201, 202 wiedergibt. Insbesondere können (ggf. alle) Kombinationen von Parameterwerten, die sich innerhalb des Parameterbereichs 203 befinden, zulässig sein, während (ggf. alle) Kombinationen von Parameterwerten, die sich außerhalb des Parameterbereichs 203 befinden, unzulässig sein können.

Außerdem umfasst das Verfahren 300 das Detektieren bzw. Erfassen 302 einer Berührung an einer Berührposition 212 auf dem Bildschirm 200. Es kann dann bestimmt 303 werden, ob die Berührposition 212 innerhalb oder außerhalb des Parameterbereichs 203 liegt. Ferner können auf Basis der Berührposition 212 Parameterwerte der zumindest zwei Betriebsparameter 201, 202 für den Betrieb der zumindest einen Betriebskomponente 104, 111 ermittelt 304 werden, (ggf. nur dann) wenn bestimmt 303 wird, dass die Berührposition 212 innerhalb des Parameterbereichs 203 liegt.

Die in diesem Dokument beschriebenen Maßnahmen ermöglichen die gleichzeitige Eingabe von Parameterwerten für mehrere Betriebsparameter 201, 202, die direkt auf einem Bildschirm 200 angezeigt werden. So kann ein Scrollen durch ein Menü entfallen, was eine komfortable und schnelle Eingabe von Parameterwerten ermöglicht. Des Weiteren werden dem Nutzer in direkter Weise vorliegende Beschränkungen bei der Einstellung der Betriebsparameter 201, 202 dargestellt. Insbesondere können Abhängigkeiten zwischen Betriebsparametern visuell dargestellt werden. So kann eine zuverlässige Eingabe von Parameterwerten ermöglicht werden. Insbesondere können so zusätzliche Fehlermeldungen bei der Eingabe von Parameterwerten vermieden werden. So kann ein flüssiger und komfortabler Bedienablauf eines Hausgeräts 100 ermöglicht werden. Des Weiteren kann dem Nutzer in effizienter Weise der aktuelle Zustand der für den Nutzer relevanten Betriebsparameter 201, 202 dargestellt werden. Ferner können in effizienter Weise besondere Kombinationen von Parameterwerten (z.B. Standardeinstellung, zuletzt verwendete Einstellung, etc.) dargestellt werden.

## Patentansprüche

1. Hausgerät (100), das umfasst,
- eine Benutzerschnittstelle (103) mit einem berührungsempfindlichen Bildschirm (200);
- zumindest eine Betriebskomponente (104, 111) mit zumindest zwei einstellbaren Betriebsparametern (201, 202); wobei durch Betrieb der Betriebskomponente (104, 111) eine Funktion des Hausgeräts (100) erbracht wird; wobei die Funktion durch Änderung von Parameterwerten der zumindest zwei einstellbaren Betriebsparameter (201, 202) verändert wird; und
- eine Steuereinheit (101), die eingerichtet ist,
- Statusinformation in Bezug auf einen Ist-Zustand des Hausgeräts (100) und/oder in Bezug auf einen bereits eingestellten Parameterwert eines Betriebsparameters (201, 202) zu ermitteln;
- in Abhängigkeit von der Statusinformation einen mehrdimensionalen Parameterbereich (203) zu ermitteln, der zulässige Kombinationen von Parameterwerten der zumindest zwei Betriebsparameter (201, 202) anzeigt;
- zu veranlassen, dass der mehrdimensionaler Parameterbereich (203) auf dem Bildschirm (200) dargestellt wird;
- eine Berührung an einer Berührposition (212) auf dem Bildschirm (200) zu detektieren;
- zu bestimmen, ob die Berührposition (212) innerhalb oder außerhalb des Parameterbereichs (203) liegt; und
- auf Basis der Berührposition (212) Parameterwerte der zumindest zwei Betriebsparameter (201, 202) für den Betrieb der zumindest einen Betriebskomponente (104, 111) zu ermitteln, wenn bestimmt wird, dass die Berührposition (212) innerhalb des Parameterbereichs (203) liegt.

2. Hausgerät (100) gemäß Anspruch 1, wobei
- ein erster Betriebsparameter (201) einer ersten Achse und ein zweiter Betriebsparameter (202) einer zweiten Achse auf dem Bildschirm (200) zugeordnet ist; und
- die Steuereinheit (101) eingerichtet ist,
- Koordinaten der Berührposition (212) für die erste Achse und für die zweite Achse zu ermitteln; und
- Parameterwerte für den ersten Betriebsparameter (201) und für den zweiten Betriebsparameter (202) auf Basis der Koordinaten der Berührposition (212) zu ermitteln; wobei insbesondere der Parameter für den ersten Betriebsparameter (201) auf Basis der Koordinate für die erste Achse und der Parameter für den zweiten Betriebsparameter (202) auf Basis der Koordinate für die zweite Achse ermittelt werden.

3. Hausgerät (100) gemäß einem der vorhergehenden Ansprüche, wobei die Steuereinheit (101) eingerichtet ist, die Berührposition (212) für die Ermittlung der Parameterwerte der zumindest zwei Betriebsparameter (201, 202) unberücksichtigt zu lassen, wenn bestimmt wird, dass die Berührposition (212) außerhalb des Parameterbereichs (203) liegt.

4. Hausgerät (100) gemäß einem der vorhergehenden Ansprüche, wobei die Steuereinheit (101) eingerichtet ist, eine visuelle Rückmeldung auf dem Bildschirm (200) zu erzeugen, insbesondere durch Verwendung unterschiedlicher Farben, die anzeigt, ob die Berührposition (212) innerhalb oder außerhalb des Parameterbereichs (203) liegt.

5. Hausgerät (100) gemäß einem der vorhergehenden Ansprüche, wobei die Steuereinheit (101) eingerichtet ist,
- Standard-Parameterwerte und/oder aktuell eingestellte Parameterwerte und/oder Istwerte der zumindest zwei Betriebsparameter (201, 202) zu ermitteln;
- die Standard-Parameterwerte und/oder die aktuell eingestellten Parameterwerte und/oder die Ist-Werte einer Ist-Position (211) auf dem Bildschirm (200) zuzuweisen; und
- zu veranlassen, dass ein Ist-Icon an der Ist-Position (211) auf dem Bildschirm (200) dargestellt wird.

6. Hausgerät (100) gemäß Anspruch 5, wobei die Steuereinheit (101) eingerichtet ist,
- zu erkennen, dass sich die Berührposition (212) ausgehend von der Ist-Position (211) von der Ist-Position (211) weg bewegt; und
- zu veranlassen, dass zusätzlich zu dem Ist-Icon ein Ziel-Icon an der Berührposition (212) auf dem Bildschirm (200) dargestellt wird.

7. Hausgerät (100) gemäß einem der Ansprüche 5 bis 6, wobei die Steuereinheit (101) eingerichtet ist,
- zu erkennen, dass sich der Istwert zumindest eines der zumindest zwei Betriebsparameter (201, 202) verändert; und
- die Ist-Position (211) des Ist-Icons in Abhängigkeit des veränderten Istwertes anzupassen.

8. Hausgerät (100) gemäß einem der vorhergehenden Ansprüche, wobei die Steuereinheit (101) eingerichtet ist, zu veranlassen, dass an der Berührposition (212) ein Fadenkreuz (213) ausgegeben wird, das die Berührposition (212) mit einer ersten Achse für einen ersten Betriebsparameter (201) und mit einer zweiten Achse für einen zweiten Betriebsparameter (202) verbindet.

9. Hausgerät (100) gemäß einem der vorhergehenden Ansprüche, wobei
- die Steuereinheit (101) eingerichtet ist, zu veranlassen, dass Zusatzinformation auf dem Bildschirm (200) ausgegeben wird; und
- die Zusatzinformation umfasst,
- Information in Bezug auf einen bereits ausgewählten Parameterwert für zumindest einen Betriebsparameter (201, 202);
- Information in Bezug auf eine Anwendung des Hausgeräts (100), die mit den der Berührposition (212) entsprechenden Parameterwerten der zumindest zwei Betriebsparameter (201, 202) ermöglicht wird;
- Information in Bezug auf einen Ressourcenverbrauch des Hausgeräts (100), der durch den Betrieb mit den der Berührposition (212) entsprechenden Parameterwerten der zumindest zwei Betriebsparameter (201, 202) bewirkt wird;
- Information in Bezug auf ein Ergebnis und/oder einen Effekt, das und/oder der mit den der Berührposition (212) entsprechenden Parameterwerten der zumindest zwei Betriebsparameter (201, 202) erzielt wird; und/oder
- Information in Bezug auf unterschiedliche Teilbereiche des Funktionsbereichs (203) für unterschiedliche Anwendungen des Hausgeräts (100).

10. Hausgerät (100) gemäß einem der vorhergehenden Ansprüche, wobei
- das Hausgerät (100) einen Behälter (106) zur Aufnahme von ein oder mehreren Zutaten für ein Nahrungsmittel umfasst;
- die zumindest eine Betriebskomponente (104, 111) einen Aktor (104), insbesondere einen elektrischen Motor, umfasst, der als einstellbaren Betriebsparameter (201) eine Drehzahl aufweist;
- der Aktor (104) eingerichtet ist, ein Werkzeug (105) zur Verarbeitung von ein oder mehreren Zutaten für ein Nahrungsmittel in Abhängigkeit von einer von der Berührposition (212) abhängigen Drehzahl anzutreiben;
- die zumindest eine Betriebskomponente (104, 111) eine Temperierungseinheit (111) umfasst, die als einstellbaren Betriebsparameter (201) eine Temperatur aufweist; und
- die Temperierungseinheit (111) eingerichtet ist, den Behälter (106) in Abhängigkeit von einer von der Berührposition (212) abhängigen Temperatur zu temperieren, insbesondere zu erwärmen.

11. Hausgerät (100) gemäß Anspruch 10, wobei die Statusinformation anzeigt,
- ein Werkzeug (105) aus einer Mehrzahl von unterschiedlichen Werkzeugen (105), das von dem Aktor (104) angetrieben wird; und/oder
- eine Ist-Temperatur des Behälters (106).

12. Hausgerät (100) gemäß einem der vorhergehenden Ansprüche, wobei
- das Hausgerät (100) einen Garraum und/oder eine Garfläche umfasst;
- die zumindest eine Betriebskomponente (104, 111) eine Temperierungseinheit (111) umfasst, die eingerichtet ist, den Garraum und/oder die Garfläche zu erwärmen; und
- die zumindest zwei einstellbaren Betriebsparameter (201, 202) eine Temperatur des Garraums und/oder der Garfläche und eine Zeitdauer der Temperierung des Garraums und/oder der Garfläche umfassen.

13. Hausgerät (100) gemäß einem der vorhergehenden Ansprüche, wobei
- die zumindest eine Betriebskomponente (104, 111) einen Brühkopf umfasst, der eingerichtet ist, Kaffeepulver zur Herstellung eines kaffeehaltigen Getränks aufzunehmen; und
- die zumindest zwei einstellbaren Betriebsparameter (201, 202) eine Getränkemenge und eine Kaffeestärke umfassen.

14. Hausgerät (100) gemäß Anspruch 13, wobei die Statusinformation anzeigt,
- eine Menge an verfügbaren Ressourcen, insbesondere an Wasser, an Kaffee und/oder an Milch, zur Herstellung des Getränks; und/oder
- eine verfügbare Kapazität eines Abfallbehälters, insbesondere eines Abfallbehälters für Kaffee und/oder für Abwasser.

## Claims

1. Household appliance (100), which comprises,
- a user interface (103) with a touch-sensitive monitor (200);
- at least one operating component (104, 111) with at least two adjustable operating parameters (201, 202); wherein one function of the household appliance (100) is provided by operation of the operating component (104, 111); wherein the function is changed by changing parameter values of the at least two adjustable operating parameters (201, 202); and
- a control unit (101), which is configured
- to determine status information relating to an actual state of the household appliance (100) and/or relating to an already adjusted parameter value of an operating parameter (201, 202);
- to determine a multidimensional parameter range (203) as a function of the status information, said parameter range indicating permissible combinations of parameter values of the at least two operating parameters (201, 202);
- to trigger the multidimensional parameter range (203) being displayed on the monitor (200);
- to detect contact with a contact position (212) on the monitor (200);
- to determine whether the contact position (212) lies inside or outside of the parameter range (203); and
- to determine, on the basis of the contact position (212), parameter values of the at least two operating parameters (201, 202) for operation of the at least one operating component (104, 111), if it is determined that the contact position (212) lies within the parameter range (203).

2. Household appliance (100) according to claim 1, wherein
- a first operating parameter (201) is assigned to a first axis and a second operating parameter (202) is assigned to a second axis on the monitor (200); and
- the control unit (101) is configured
- to determine coordinates of the contact position (212) for the first axis and for the second axis; and
- to determine parameter values for the first operating parameter (201) and for the second operating parameter (202) on the basis of the coordinates of the contact position (212); wherein in particular the parameter for the first operating parameter (201) is determined on the basis of the coordinate for the first axis and the parameter for the second operating parameter (202) is determined on the basis of the coordinate for the second axis.

3. Household appliance (100) according to one of the preceding claims, wherein the control unit (101) is configured to allow the contact position (212) to go unconsidered for determining the parameter values of the at least two operating parameters (201, 202), if it is determined that the contact position (212) lies outside of the parameter range (203).

4. Household appliance (100) according to one of the preceding claims, wherein the control unit (101) is configured to generate visual feedback on the monitor (200), in particular by using different colours, which indicates whether the contact position (212) lies inside or outside of the parameter range (203).

5. Household appliance (100) according to one of the preceding claims, wherein the control unit (101) is configured
- to determine standard parameter values and/or currently set parameter values and/or actual values of the at least two operating parameters (201, 202);
- to assign standard parameter values and/or the currently set parameter values and/or the actual values to an actual position (211) on the monitor (200); and
- to trigger an actual icon being displayed at the actual position (211) on the monitor (200).

6. Household appliance (100) according to claim 5, wherein the control unit (101) is configured
- to identify that starting from the actual position (211) the contact position (212) is moved away from the actual position (211); and
- to trigger that in addition to the actual icon a target icon is shown at the contact position (212) on the monitor (200).

7. Household appliance (100) according to one of claims 5 to 6, wherein the control unit (101) is configured
- to identify that the actual value of at least one of the at least two operating parameters (201, 202) changes; and
- to adjust the actual position (211) of the actual icon as a function of the changed actual value.

8. Household appliance (100) according to one of the preceding claims, wherein the control unit (101) is configured to trigger that a crosshair cursor (210) are output at the contact position (212), said crosshair cursor connecting the contact position (212) with a first axis for a first operating parameter (201) and with a second axis for a second operating parameter (202).

9. Household appliance (100) according to one of the preceding claims, wherein
- the control unit (101) is configured to trigger additional information being output on the monitor (200); and
- the additional information comprises
- information relating to an already selected parameter value for at least one operating parameter (201, 202);
- information relating to a use of the household appliance (100), which is enabled with the parameter values, corresponding to the contact position (212), of the at least two operating parameters (201, 202);
- information relating to a consumption of resources of the household appliance (100), which is effected by the operation with the parameter values, corresponding to the contact position (212), of the at least two operating parameters (201, 202);
- information relating to a result and/or an effect, which is achieved with the parameter values, corresponding to the contact position (212), of the at least two operating parameters (201, 202); and/or
- information relating to different subareas of the functional area (203) for different applications of the household appliance (100).

10. Household appliance (100) according to one of the preceding claims, wherein
- the household appliance (100) comprises a container (106) for receiving one or more ingredients for food;
- the at least one operating component (104, 111) comprises an actuator (104), in particular an electric motor, which has a rotational speed as an adjustable operating parameter (201);
- the actuator (104) is configured to drive a tool (105) for processing one or more ingredients for a food as a function of a rotational speed dependent on the contact position (212);
- the at least one operating component (104, 111) comprises a temperature control unit (111), which has a temperature as an adjustable operating parameter (201); and
- the temperature control unit (111) is configured to temperature control, in particular heat, the container (106) as a function of a temperature dependent on the contact position (212).

11. Household appliance (100) according to claim 10, wherein the status information indicates
- a tool (105) from a plurality of different tools (105), which is driven by an actuator (104); and/or
- an actual temperature of the container (106).

12. Household appliance (100) according to one of the preceding claims, wherein
- the household appliance (100) comprises a cooking compartment and/or a cooking surface;
- the at least one operating component (104, 111) comprises a temperature control unit (111), which is configured to heat the cooking compartment and/or the cooking surface; and
- the at least two adjustable operating parameters (201, 202) comprise a temperature of the cooking compartment and/or the cooking surface and a duration of the temperature control of the cooking compartment and/or the cooking surface.

13. Household appliance (100) according to one of the preceding claims, wherein
- the at least one operating component (104, 111) comprises a brewing head, which is configured to receive coffee powder for producing a beverage containing coffee; and
- the at least two adjustable operating parameters (201, 202) comprise a beverage quantity and a coffee strength.

14. Household appliance (100) according to claim 13, wherein the status information indicates
- a quantity of available resources, in particular water, coffee and/or milk, for producing the beverage; and/or
- an available capacity of a waste container, in particular a waste container for coffee and/or for waste water.

## Revendications

1. Appareil ménager (100) qui comprend
- une interface utilisateur (103) comprenant un écran tactile (200) ;
- au moins un composant fonctionnel (104, 111) comprenant au moins deux paramètres de fonctionnement (201, 202) réglables ; dans lequel une fonction de l'appareil ménager (100) est fournie en raison du fonctionnement du composant fonctionnel (104, 111) ; dans lequel la fonction est modifiée par modification de valeurs de paramètres des au moins deux paramètres de fonctionnement (201, 202) réglables ; et
- une unité de commande (101) qui est configurée
- pour déterminer une information d'état par rapport à un état réel de l'appareil ménager (100) et/ou par rapport à une valeur de paramètre déjà réglée d'un paramètre de fonctionnement (201, 202) ;
- pour déterminer, en fonction de l'information d'état, une plage de paramètres (203) multidimensionnelle qui indique des combinaisons admissibles de valeurs de paramètres des au moins deux paramètres de fonctionnement (201, 202) ;
- pour inciter que la plage de paramètres (203) multidimensionnelle soit représentée sur l'écran (200) ;
- pour détecter un contact à une position de contact (212) sur l'écran (200) ;
- pour déterminer si la position de contact (212) est située à l'intérieur ou à l'extérieur de la plage de paramètres (203) ; et,
- sur la base de la position de contact (212), pour déterminer des valeurs de paramètres des au moins deux paramètres de fonctionnement (201, 202) pour le fonctionnement de l'au moins un composant fonctionnel (104, 111) lorsqu'il est déterminé que la position de contact (212) est située à l'intérieur de la plage de paramètres (203).

2. Appareil ménager (100) selon la revendication 1, dans lequel
- un premier paramètre de fonctionnement (201) est attribué à un premier axe situé sur l'écran (200), et un deuxième paramètre de fonctionnement (202) est attribué à un deuxième axe situé sur l'écran (200) ; et
- l'unité de commande (101) est configurée
- pour déterminer des coordonnées de la position de contact (212) pour le premier axe et pour le deuxième axe ; et
- pour déterminer des valeurs de paramètres pour le premier paramètre de fonctionnement (201) et pour le deuxième paramètre de fonctionnement (202) sur la base des coordonnées de la position de contact (212) ; dans lequel notamment le paramètre pour le premier paramètre de fonctionnement (201) est déterminé sur la base des coordonnées pour le premier axe, et le paramètre pour le deuxième paramètre de fonctionnement (202) sur la base des coordonnées pour le deuxième axe.

3. Appareil ménager (100) selon l'une quelconque des revendications précédentes, dans lequel l'unité de commande (101) est configurée pour ne pas tenir compte de la position de contact (212) pour la détermination des valeurs de paramètres des au moins deux paramètres de fonctionnement (201, 202) lorsqu'il est déterminé que la position de contact (212) est située en dehors de la plage de paramètres (203).

4. Appareil ménager (100) selon l'une quelconque des revendications précédentes, dans lequel l'unité de commande (101) est configurée pour générer un message de retour visuel sur l'écran (200), notamment par utilisation de différentes couleurs, lequel indique si la position de contact (212) est située à l'intérieur ou à l'extérieur de la plage de paramètres (203).

5. Appareil ménager (100) selon l'une quelconque des revendications précédentes, dans lequel l'unité de commande (101) est configurée
- pour déterminer des valeurs de paramètres standard et/ou des valeurs de paramètres actuellement réglées et/ou des valeurs réelles des au moins deux paramètres de fonctionnement (201, 202) ;
- pour attribuer les valeurs de paramètres standard et/ou les valeurs de paramètres actuellement réglées et/ou les valeurs réelles à une position réelle (211) sur l'écran (200) ; et
- pour inciter qu'une icône réelle soit représentée sur l'écran (200) à la position réelle (211).

6. Appareil ménager (100) selon la revendication 5, dans lequel l'unité de commande (101) est configurée
- pour identifier si la position de contact (212), en partant de la position réelle (211), se déplace en s'éloignant de la position réelle (211) ; et
- pour inciter qu'en plus de l'icône réelle, une icône cible soit représentée sur l'écran (200) à la position de contact (212).

7. Appareil ménager (100) selon l'une quelconque des revendications 5 à 6, dans lequel l'unité de commande (101) est configurée
- pour identifier si la valeur réelle d'au moins un des au moins deux paramètres de fonctionnement (201, 202) se modifie ; et
- pour adapter la position réelle (211) de l'icône réelle en fonction de la valeur réelle modifiée.

8. Appareil ménager (100) selon l'une quelconque des revendications précédentes, dans lequel l'unité de commande (101) est configurée pour inciter qu'un réticule (213) soit sorti à la position de contact (212), lequel relie la position de contact (212) à un premier axe pour un premier paramètre de fonctionnement (201) et à un deuxième axe pour un deuxième paramètre de fonctionnement (202).

9. Appareil ménager (100) selon l'une quelconque des revendications précédentes, dans lequel
- l'unité de commande (101) est configurée pour inciter qu'une information supplémentaire soit sortie sur l'écran (200) ; et dans lequel
- l'information supplémentaire comprend
- une information relative à une valeur de paramètre déjà sélectionnée pour au moins un paramètre de fonctionnement (201, 202) ;
- une information relative à une application de l'appareil ménager (100), laquelle est rendue possible avec les valeurs de paramètres, correspondant à la position de contact (212), des au moins deux paramètres de fonctionnement (201, 202) ;
- une information relative à une consommation de ressources de l'appareil ménager (100), laquelle est due au fonctionnement avec les valeurs de paramètres, correspondant à la position de contact (212), des au moins deux paramètres de fonctionnement (201, 202) ;
- une information relative à un résultat et/ou à un effet qui est obtenu avec les valeurs de paramètres, correspondant à la position de contact (212), des au moins deux paramètres de fonctionnement (201, 202) ; et/ou
- une information relative à différentes plages partielles de la plage fonctionnelle (203) pour différentes applications de l'appareil ménager (100).

10. Appareil ménager (100) selon l'une quelconque des revendications précédentes, dans lequel
- l'appareil ménager (100) comprend un récipient (106) pour le logement de un ou de plusieurs ingrédients pour un aliment ;
- l'au moins un composant fonctionnel (104, 111) comprend un actionneur (104), notamment un moteur électrique, qui présente une vitesse de rotation en tant que paramètre de fonctionnement (201) réglable ;
- l'actionneur (104) est configuré pour entraîner un outil (105) destiné à traiter un ou plusieurs ingrédients pour un aliment en fonction d'une vitesse de rotation dépendant de la position de contact (212) ;
- l'au moins un composant fonctionnel (104, 111) comprend une unité de régulation de température qui présente une température en tant que paramètre de fonctionnement (201) réglable ; et
- l'unité de régulation de température (111) est configurée pour réguler la température du récipient (106), notamment pour l'échauffer, en fonction d'une température dépendant de la position de contact (212).

11. Appareil ménager (100) selon la revendication 10, dans lequel l'information d'état indique
- un outil (105) parmi une pluralité d'outils différents (105), lequel est entraîné par l'actionneur (104) ; et/ou
- une température réelle du récipient (106).

12. Appareil ménager (100) selon l'une quelconque des revendications précédentes, dans lequel
- l'appareil ménager (100) comprend un espace de cuisson et/ou une surface de cuisson ;
- l'au moins un composant fonctionnel (104, 111) comprend une unité de régulation de température (111) qui est configurée pour échauffer l'espace de cuisson et/ou la surface de cuisson ; et
- les au moins deux paramètres de fonctionnement (201, 202) réglables comprennent une température de l'espace de cuisson et/ou de la surface de cuisson, et une durée de la régulation de température de l'espace de cuisson et/ou de la surface de cuisson.

13. Appareil ménager (100) selon l'une quelconque des revendications précédentes, dans lequel
- l'au moins un composant fonctionnel (104, 111) comprend une tête de percolation qui est configurée pour loger de la poudre de café destinée à réaliser une boisson contenant du café ; et
- les au moins deux paramètres de fonctionnement (201, 202) réglables comprennent une quantité de boisson et une intensité du café.

14. Appareil ménager (100) selon la revendication 13, dans lequel l'information d'état indique
- une quantité de ressources disponibles, notamment d'eau, de café et/ou de lait pour la réalisation de la boisson ; et/ou
- une capacité disponible d'un récipient pour déchets, notamment récipient pour déchets pour le café et/ou pour l'eau évacuée.
